# EUROPEAN PATENT APPLICATION

(11) **EP 4 603 219 A1**
(43) Date of publication of application: **20.08.2025**
(21) Application number: 24859423.6
(22) Date of filing: 09.08.2024
(51) Int. Cl.: B23G 1/44, B08B 1/32, B23G 9/00, F16B 25/02

(54) **FOREIGN MATTER REMOVAL TAP**

(30) Priority: 01.09.2023 JP 2023142135
(71) Applicant: Rise Works Inc., Kaizuka-shi, Osaka 597-0042 (JP)
(72) Inventor: TANIGUCHI Motoaki, Kaizuka-shi, Osaka 597-0042 (JP); KATAYAMA Daichi, Kaizuka-shi, Osaka 597-0042 (JP)
(74) Representative: DTS Patent- und Rechtsanwälte PartmbB
(86) International application number: PCT/JP2024/028636
(87) International publication number: WO 2025/047383

(57) **Abstract**

A foreign matter removing tap is a foreign matter removing tap for removing foreign matter adhering to a surface of an internal thread and has a tapered thread portion and an internal thread engagement portion, and the tapered thread portion partially or entirely has a spiral groove portion.

## Description

### Technical Field

One embodiment of the present invention relates to a tap for removing foreign matter adhering to an internal thread portion.

### Background Art

In a case in which a screw hole is processed in a metal material, a resin material, or the like, a prepared hole is provided in a work object and then an internal thread is formed by use of a tap. In a case in which surface treatment such as coating is necessary for the metal material, the coating is usually applied to the metal material after the internal thread is formed, which causes a coating material to adhere to a thread surface of the internal thread. In addition, swarf, powder, liquid, or the like may adhere after the internal thread is formed. Therefore, foreign matter needs to be removed for use as the internal thread.

Patent Literature 1 discloses a method of removing the coating material adhering to an internal thread portion. The invention disclosed in Patent Literature 1, by inserting while rotating a coating material removing tap to the internal thread portion, removes a coating film formed on the internal thread portion.

### Citation List

### Patent Literature

Patent Literature 1: Japanese Unexamined Patent Application Publication No. 2007-44575

### Summary of Invention

### Technical Problem

With regard to the foreign matter adhering to an internal thread, a foreign matter removing tap to be engaged with a formed internal thread has been used and accurately inserted into the internal thread to cut and remove the foreign matter. However, when a position or angle of insertion of the foreign matter removing tap is shifted, the foreign matter is insufficiently removed, which has caused such a problem that the function as an internal thread is unable to be sufficiently exhibited. In addition, such a problem that damage to the internal thread occurs, which damages a surface of the internal thread has been caused.
Therefore, the foreign matter removing tap has needed to be accurately inserted into the internal thread, which has needed to be performed manually by a skilled worker.

### Solution to Problem

The inventors have repeatedly made intensive examinations in order to solve the problem and developed a foreign matter removing tap capable of easily adjusting a position and angle of insertion to the internal thread.

One embodiment of the present invention is directed to solve the problem and provides the following [1] to [16].
[1] A foreign matter removing tap is for removing foreign matter adhering to a surface of an internal thread and includes a tapered thread portion and an internal thread engagement portion, and the tapered thread portion partially or entirely has a spiral groove portion.
[2] The foreign matter removing tap disclosed in [1] in which the tapered thread portion has a taper angle of 2 to 75 degrees.
[3] The foreign matter removing tap disclosed in [1] or [2] in which a length of the internal thread engagement portion in a tap center axis direction is 0.10 to 10.0 with respect to a root diameter of the internal thread.
[4] The foreign matter removing tap disclosed in [1] or [2] in which a crest diameter of a thread of the internal thread engagement portion is 0.80 to 1.00 with respect to a root diameter of the internal thread.
[5] The foreign matter removing tap disclosed in [1] or [2] in which the foreign matter removing tap includes a tip guide portion having a partially or entirely tapered shape, and
   the tapered thread portion has one end connected to the tip guide portion and another end connected to the internal thread engagement portion.
[6] The foreign matter removing tap disclosed in [1] in which a length of the internal thread engagement portion in a tap center axis direction is 0.10 to 10.0 with respect to a root diameter of the internal thread.
[7] The foreign matter removing tap disclosed in [1] in which a crest diameter of a thread of the internal thread engagement portion is 0.80 to 1.00 with respect to a root diameter of the internal thread.
[8] The foreign matter removing tap disclosed in [1] in which the foreign matter removing tap includes a tip guide portion having a partially or entirely tapered shape, and
   the tapered thread portion has one end connected to the tip guide portion and another end connected to the internal thread engagement portion.
[9] The foreign matter removing tap disclosed in [1] in which a length of the internal thread engagement portion in a tap center axis direction is 0.10 to 10.0 with respect to a root diameter of the internal thread, and a crest diameter of a thread of the internal thread engagement portion is 0.80 to 1.00 with respect to the root diameter of the internal thread.
[10] The foreign matter removing tap disclosed in [1] in which a length of the internal thread engagement portion in a tap center axis direction is 0.10 to 10.0 with respect to a root diameter of the internal thread, the foreign matter removing tap includes a tip guide portion having a partially or entirely tapered shape, and the tapered thread portion has one end connected to the tip guide portion and another end connected to the internal thread engagement portion.
[11] The foreign matter removing tap disclosed in [1] in which a crest diameter of a thread of the internal thread engagement portion is 0.80 to 1.00 with respect to a root diameter of the internal thread, and the foreign matter removing tap includes a tip guide portion having a partially or entirely tapered shape, and the tapered thread portion has one end connected to the tip guide portion and another end connected to the internal thread engagement portion.
[12] The foreign matter removing tap disclosed in [1] in which a crest diameter of a thread of a tip end portion of the tapered thread portion is 0.30 to 0.90 with respect to a crest diameter of a thread of a base end portion of the tapered thread portion, a length of the internal thread engagement portion in a tap center axis direction is 0.10 to 10.0 with respect to a crest diameter of the internal thread, and a crest diameter of a thread of the internal thread engagement portion is 0.80 to 1.00 with respect to the root diameter of the internal thread.
[13] The foreign matter removing tap disclosed in [1] in which a crest diameter of a thread of a tip end portion of the tapered thread portion is 0.30 to 0.90 with respect to a crest diameter of a thread of a base end portion of the tapered thread portion, a length of the internal thread engagement portion in a tap center axis direction is 0.10 to 10.0 with respect to a root diameter of the internal thread, and the foreign matter removing tap includes a tip guide portion having a partially or entirely tapered shape, and the tapered thread portion has one end connected to the tip guide portion and another end connected to the internal thread engagement portion.
[14] The foreign matter removing tap disclosed in [1] in which a crest diameter of a thread of a tip end portion of the tapered thread portion is 0.30 to 0.90 with respect to a crest diameter of a thread of a base end portion of the tapered thread portion, a crest diameter of a thread of the internal thread engagement portion is 0.80 to 1.00 with respect to the root diameter of the internal thread, the foreign matter removing tap includes a tip guide portion having a partially or entirely tapered shape, and the tapered thread portion has one end connected to the tip guide portion and another end connected to the internal thread engagement portion.
[15] The foreign matter removing tap disclosed in [1] in which a length of the internal thread engagement portion in a tap center axis direction is 0.10 to 10.0 with respect to a root diameter of the internal thread, a crest diameter of a thread of the internal thread engagement portion is 0.80 to 1.00 with respect to the root diameter of the internal thread, the foreign matter removing tap includes a tip guide portion having a partially or entirely tapered shape, and the tapered thread portion has one end connected to the tip guide portion and another end connected to the internal thread engagement portion.
[16] The foreign matter removing tap disclosed in [1] in which a crest diameter of a thread of a tip end portion of the tapered thread portion is 0.30 to 0.90 with respect to a crest diameter of a thread of a base end portion of the tapered thread portion, a length of the internal thread engagement portion in a tap center axis direction is 0.10 to 10.0 with respect to a root diameter of the internal thread, a crest diameter of a thread of the internal thread engagement portion is 0.80 to 1.00 with respect to the root diameter of the internal thread, the foreign matter removing tap includes a tip guide portion having a partially or entirely tapered shape, and the tapered thread portion has one end connected to the tip guide portion and another end connected to the internal thread engagement portion.

### Advantageous Effects of Invention

According to one embodiment of the present invention, even when a position or angle of insertion of the foreign matter removing tap is shifted, foreign matter is able to be sufficiently removed, and occurrence of damage of an internal thread is able to be significantly reduced.

### Brief Description of Drawings

[FIG. 1] FIG. 1 is a front view of a foreign matter removing tap according to Embodiment 1.
[FIG. 2] FIG. 2 is a partially enlarged view showing a usage state of the foreign matter removing tap in FIG. 1.
[FIG. 3] FIG. 3 is a partially enlarged view showing a usage state of the foreign matter removing tap in FIG. 1.

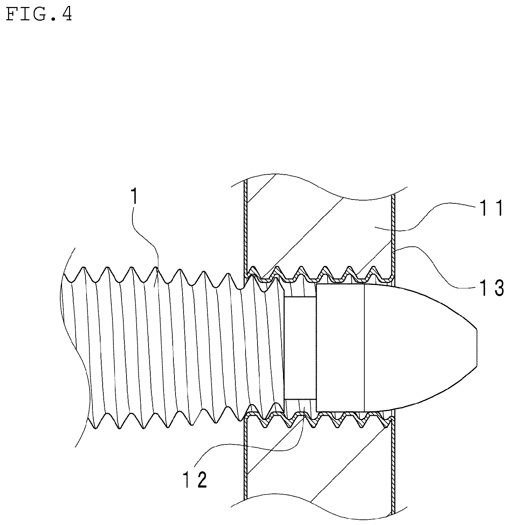

[FIG. 4] FIG. 4 is a partially enlarged view showing a usage state of the foreign matter removing tap in FIG. 1.

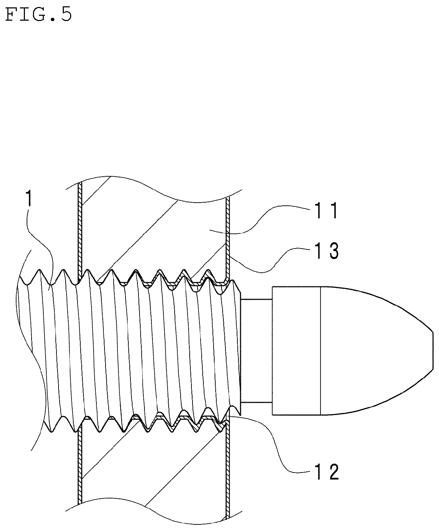

[FIG. 5] FIG. 5 is a partially enlarged view showing a usage state of the foreign matter removing tap in FIG. 1.

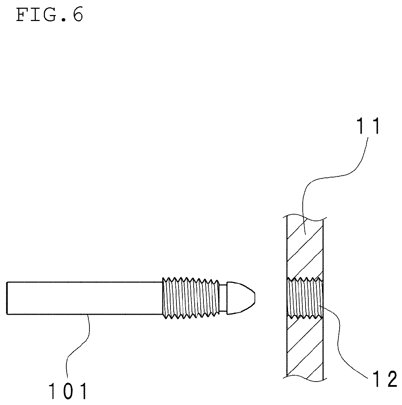

[FIG. 6] FIG. 6 is a front view of a foreign matter removing tap according to Embodiment 2 of the present invention.

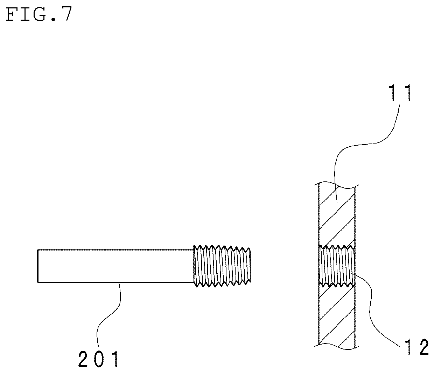

[FIG. 7] FIG. 7 is a front view of a foreign matter removing tap according to Embodiment 3 of the present invention.

### Description of Embodiments

Hereinafter, a foreign matter removing tap according to one embodiment of the present invention will be described with reference to the drawings as necessary. It is noted that the present invention is not limited to each embodiment.

### (Embodiment 1)

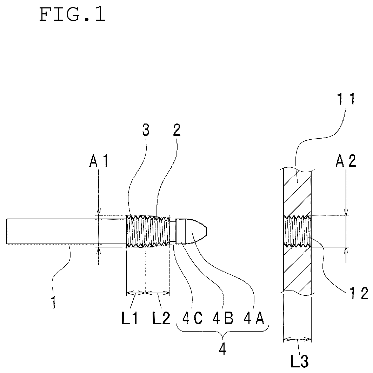

A foreign matter removing tap 1 disclosed in FIG. 1 is a foreign matter removing tap for removing foreign matter 13 adhering to a surface of an internal thread 12 and has a tapered thread portion 2 and an internal thread engagement portion 3, and the tapered thread portion 2 partially or entirely has a spiral groove portion 5.

### (Tapered Thread Portion)

The tapered thread portion 2 has a tapered shape and is formed such that the crest diameter of a thread narrows from a base end portion toward a tip end portion. The tapered thread portion 2 may be a linear taper, an exponential function taper, a parabolic taper, or the like, for example.

A taper angle of the tapered thread portion is preferably 2 to 75 degrees, more preferably 4 to 60 degrees, and particularly preferably 6 to 30 degrees. Since the foreign matter 13 is attached to the internal thread 12, an external thread screw of corresponding standards is unable to be inserted, and neither the root diameter nor the surface shape is uniform. When the taper angle of the tapered thread portion 2 is in the range described above, insertion is also easily possible with respect to the internal thread 12.

The crest diameter of the thread of the base end portion of the tapered thread portion 2 is the same as the crest diameter of the thread of the internal thread engagement portion 3. The tapered thread portion 2 and the internal thread engagement portion 3 are smoothly connected.

The tapered thread portion 2 partially or entirely has a spiral groove portion 5. The groove portion 5 is able to have the same shape as an external thread screw, for example.

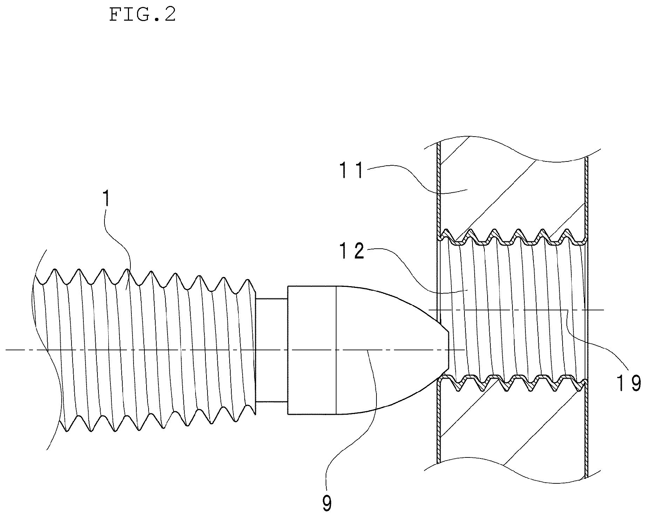

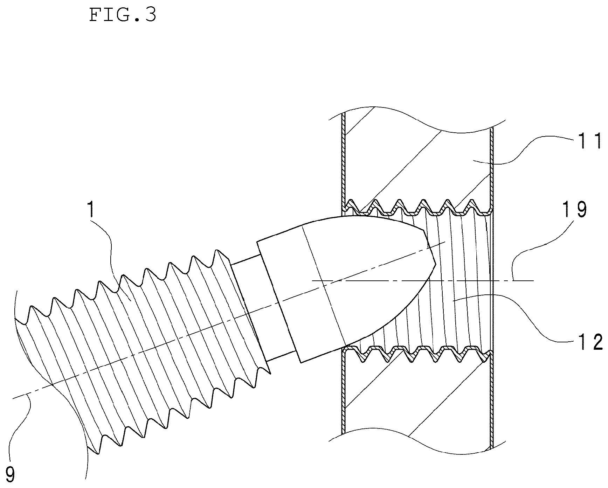

As shown in FIGS. 2 and 3, when a center axis 9 of the tap 1 and a center axis 19 of the internal thread 12 are shifted, the tap 1 is unable to be inserted into the internal thread 12 at a correct position and angle. When the tap 1 is inserted into the internal thread 12 while being rotated, the groove portion 5 is engaged with a groove of the internal thread 12, and the tap 1 is inserted along the groove of the internal thread 12. As a result, the shift of an insertion position and insertion angle of the tap 1 is able to be corrected to the correct position and angle. In addition, the internal thread engagement portion 3 is accurately engaged with the groove of the internal thread 12, which sufficiently exhibits the function to remove foreign matter adhering to the surface of the internal thread 12 and does not damage a thread surface of the internal thread 12.

Moreover, the groove portion 5, when the tap 1 is inserted into the internal thread 12 while being rotated, is engaged with the groove of the internal thread 12 and is able to remove the foreign matter adhering to the surface of the internal thread 12.

A length L2 of the tapered thread portion 2 in the tap center axis direction is preferably 0.10 to 10.00 with respect to a length L1 of the internal thread engagement portion 3 in the tap center axis direction and is more preferably 0.50 to 1.50. In a case in which the length L2 of the tapered thread portion 2 in the tap center axis direction is within the range described above, a function of correcting a position and an angle is able to be exhibited while foreign matter removing ability is ensured.

The length L1 of the internal thread engagement portion 3 in the tap center axis direction is preferably 0.10 to 10.00 with respect to a crest diameter A1 of the thread of the internal thread engagement portion 3 of the foreign matter removing tap 1, is more preferably 0.50 to 1.50, and is especially preferably 0.80 to 1.20. When the range is smaller, an effective engagement portion to the internal thread engagement portion 3 is insufficient, and a sufficient foreign matter removing function is unable to be exhibited. In addition, when the range is larger, the total length of the tap 1 is increased, which is unpreferable because of poor space performance for use.

### (Internal Thread Engagement Portion)

The internal thread engagement portion 3 is a spiral groove provided so as to be engaged with the thread surface of the internal thread 12. The internal thread engagement portion 3 is, for example, a groove of which the thread has a smaller crest diameter, the groove having the same shape as a tap surface used for tapping of the internal thread 12, or the like.

The tapered thread portion 2 preferably partially or entirely has a cut surface. In addition, the internal thread engagement portion 3 preferably partially or entirely has a cut surface. As a result, when the tap 1 is inserted into the internal thread 12 while being rotated, foreign matter is able to be removed mainly by a physical action such as cutting the foreign matter present between the tap 1 and the internal thread 12, or the like.

The cut surface may have any shape engaged with an internal thread and may have a spiral shape or may have a shape such as a groove, a blade, a hole, or a claw.

The crest diameter A1 of the thread of the internal thread engagement portion 3 is preferably 0.80 to 1.00 with respect to a root diameter A2 of the internal thread 12, is more preferably 0.85 to 1.00, is further preferably 0.90 to 1.00, and is especially preferably 1.00. Since the foreign matter 13 is attached to a surface of the internal thread 12, the crest diameter A1 of the thread of the internal thread engagement portion 3 is preferably the same as or smaller than the root diameter A2 of the internal thread 12. In addition, with the ratio of 0.80 or more, the internal thread engagement portion 3 is able to be large enough to remove the foreign matter on the surface of the internal thread 12.

The length of the internal thread engagement portion 3 in the tap center axis direction is preferably 0.10 to 10.0 with respect to the root diameter A2 of the internal thread 12, is further preferably 0.15 to 1.80, and is especially preferably 0.30 to 1.50. The length of the internal thread engagement portion 3 in the tap center axis direction is within the range, so that the tap 1 is able to have an appropriate size according to the internal thread 12.

The foreign matter removing tap 1 has a tip guide portion 4, and the tapered thread portion 2 has one end connected to the tip guide portion 4 and the other end connected to the internal thread engagement portion 3.

The tip guide portion 4 has an adjustment portion 4A, a guide portion 4B, and a gap portion 4C. The tap 1, by having the tip guide portion 4, is able to be smoothly inserted into the internal thread.

### (Embodiment 2)

A foreign matter removing tap 101 does not have the guide portion 4B. The function of correcting the insertion position and insertion angle of the tap is able to be fully ensured while the structure of the tap is simplified.

### (Embodiment 3)

A foreign matter removing tap 201 does not have the tip guide portion 4. The function of correcting the insertion position and insertion angle of the tap is able to be fully ensured while the structure of the tap is simplified.

A workpiece 11 includes the internal thread 12. The foreign matter 13 includes a metal piece, metal dust, a resin piece, resin dust, a coating film, and a liquid, for example, and may adhere to the front surface of the workpiece 11 in addition to the internal thread 12.

### Industrial availability

The present invention, since foreign matter is able to be sufficiently removed and damage to an internal thread is also able to be significantly reduced even when the position or angle at which a foreign matter removing tap is inserted is shifted, is able to be useful for industrial use.

### Reference Signs List

1 foreign matter removing tap, 2 tapered thread portion, 3 internal thread engagement portion, 4 tip guide portion, 9 tap center axis, 11 workpiece, 12 internal thread, 13 foreign matter, 19 internal thread center axis, 101 foreign matter removing tap, 201 foreign matter removing tap

## Claims

1. A foreign matter removing tap for removing foreign matter adhering to a surface of an internal thread, the foreign matter removing tap comprising:
a tapered thread portion; and
an internal thread engagement portion, wherein the tapered thread portion partially or entirely has a spiral groove portion.

2. The foreign matter removing tap according to claim 1, wherein the tapered thread portion has a taper angle of 2 to 75 degrees.

3. The foreign matter removing tap according to claim 1, wherein the tapered thread portion has a taper angle of 6 to 30 degrees.

4. The foreign matter removing tap according to any one of claim 1 to claim 3, wherein a length of the internal thread engagement portion in a tap center axis direction is 0.10 to 10.0 with respect to a root diameter of the internal thread.

5. The foreign matter removing tap according to any one of claim 1 to claim 3, wherein a length of the internal thread engagement portion in the tap center axis direction is 0.30 to 1.50 with respect to a root diameter of the internal thread.

6. The foreign matter removing tap according to any one of claim 1 to claim 5, wherein a crest diameter of a thread of the internal thread engagement portion is 0.80 to 1.00 with respect to a root diameter of the internal thread.

7. The foreign matter removing tap according to any one of claim 1 to claim **5,** wherein a crest diameter of a thread of the internal thread engagement portion is 0.90 to 1.00 with respect to a root diameter of the internal thread.

8. The foreign matter removing tap according to any one of claim 1 to claim 5, wherein a crest diameter of a thread of the internal thread engagement portion is 1.00 with respect to a root diameter of the internal thread.

9. The foreign matter removing tap according to any one of claim 1 to claim 8, wherein a cross-sectional shape in a direction parallel to the tap center axis direction of a screw thread provided by the groove portion located in a tap tip direction of the tapered thread portion is an approximate triangle.

10. The foreign matter removing tap according to any one of claim 1 to claim 9, wherein the cross-sectional shape in the direction parallel to the tap center axis direction of the screw thread provided by the groove portion located in the tap tip direction of the tapered thread portion is substantially same as a cross-sectional shape in a direction parallel to a tap center axis direction of a screw thread provided at the internal thread engagement portion.

11. The foreign matter removing tap according to any one of claim 1 to claim 10, comprising a tip guide portion having a partially or entirely tapered shape, wherein the tapered thread portion has one end connected to the tip guide portion and another end connected to the internal thread engagement portion.
